# EUROPEAN PATENT APPLICATION

(11) **EP 2 036 822 A1**
(43) Date of publication of application: **18.03.2009**
(21) Application number: 07123327.4
(22) Date of filing: 17.12.2007
(51) Int. Cl.: B65D 5/32

(54) **Foldable box**

(30) Priority: 11.09.2007 CN 200720171760 U
(71) Applicant: Tao, Jian, Shenzhen, Guangdong 518-109 (CN)
(72) Inventor: Tao, Jian, Shenzhen, Guangdong 518-109 (CN)
(74) Representative: von Kreisler Selting Werner

(57) **Abstract**

A foldable box includes a bottom board (1), two first side boards (2) connecting one pair of opposing side edges of the bottom board, two U-shaped members (3) connecting the other pair of opposing side edges of the bottom board, and two supporting boards (6) respectively connecting the first side boards. The bottom board, the two first side boards, the two U-shaped members and the two supporting boards cooperatively form a rectangular box with an opened end. The foldable box of the present invention is foldable to be in a shape of flat board during storage and transportation for saving the occupied space thereof thereby facilitating to reduce cost of storage and transportation. Furthermore, it does not require to paste through gluewater or adhesive glue thereby facilitating to use and use repeatedly.

## Description

### FIELD OF THE INVENTION

The present invention relates to a box, and particularly to a foldable box.

### BACKGROUND OF THE INVENTION

Boxes are often used to pack food, cosmetic, stationery and decoration. When a box is made, the box has a fixed volume. The box occupies the same space whether the box receives goods or not. Therefore, the conventional box needs large space to store and transport, which increases cost of storage and transportation.

To encounter the problems of storage and transportation of box, a foldable box is provided. The conventional foldable box includes a plurality of foldable connecting boards. During transportation, the connecting boards are folded to locate at a same plane for saving transportation space and so reducing cost of transportation. In use, the connecting boards are ready to open to be in a shape of box and then the connecting boards are required to paste together via gluewater or adhesive glue. However, the pasting process is time-consuming and so increases cost. Furthermore, the box can not be used repeatedly, which results in waste of resource.

### SUMMARY OF THE INVENTION

An object of the present invention is to provide a foldable box which is foldable to be in a shape of flat board during storage and transportation for saving space thereby reducing cost and doses not need to paste in use thereby facilitating to use and use repeatedly.

To achieve the above object, a foldable box includes a bottom board, two first side boards connecting one pair of opposing side edges of the bottom board, two U-shaped members connecting the other pair of opposing side edges of the bottom board, and two supporting boards respectively connecting the first side boards. The bottom board, the two first side boards, the two U-shaped members and the two supporting boards cooperatively form a rectangular box with an opened end.

As described above, the foldable box of the present invention is foldable to be in a shape of flat board during storage and transportation for saving the occupied space thereof thereby facilitating to reduce cost of storage and transportation. Furthermore, it does not require to paste through gluewater or adhesive glue thereby facilitating to use and use repeatedly.

Other objects, advantages and novel features of the present invention will be drawn from the following detailed embodiment of the present invention with attached drawings, in which:

### BRIEF DESCRIPTION OF THE DRAWINGS

Fig. 1 is an expanded view of a foldable box in accordance with a first embodiment of the present invention;

Figs. 2-4 are schematic views showing the assembling process of the foldable box of Fig. 1;

Fig. 5 is a perspective view of Fig. 1;

Fig. 6 is an exploded view of a foldable box in accordance with a second embodiment of the present invention; and

Fig. 7 is an assembled view of Fig. 6.

### DESCRIPTION OF THE PREFERRED EMBODIMENTS

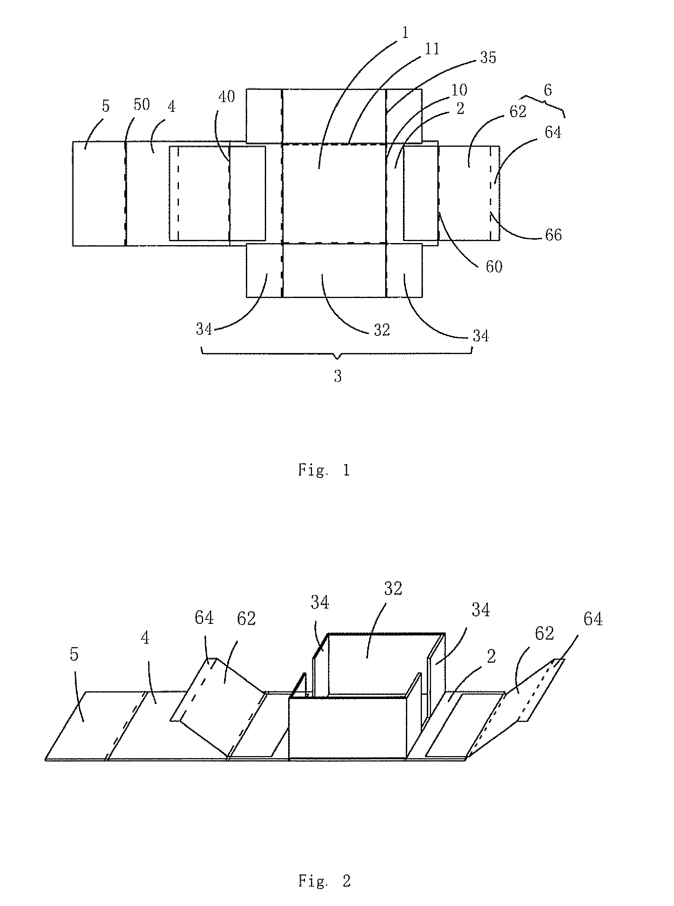

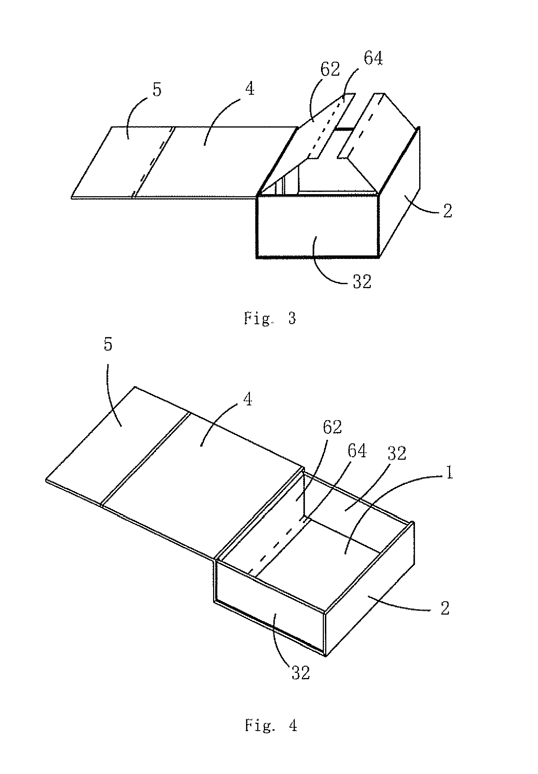

Referring to Figs. 1-5, a foldable box in accordance with a first embodiment of the present invention includes a bottom board 1, two first side boards 2 connecting one pair of opposing side edges of the bottom board 1, two U-shaped members 3 connecting the other pair of opposing side edges of the bottom board 1, a cover 4 extending from one of the first side board 2, a fastening board 5 extending from the free end of the cover 4, and two supporting boards 6 respectively connecting the first side boards 2.

The bottom board 1 is rectangular. The first side boards 2 are perpendicularly connected to the pair of opposing side edges of the bottom board 1. A folding line 10 is formed at the junction of each first side board 2 and the bottom board 1.

Each U-shaped member 3 includes a second side board 32 connecting the bottom board 1 and two connecting boards 34 connecting opposing side edges of the second side board 32. The second side boards 32 are perpendicularly connected to the other pair of opposing side edges of the bottom board 1. A folding line 11 is formed at the junction of each side board 32 and the bottom board 1. The width of the second side board 32 is substantially equal to the length of the side edge of bottom board 1. The height of the second side board 32 is substantially equal to that of the first side board 2. A folding line 35 is formed at the junction of the connecting board 34 and the second side board 32. The connecting board 34 is perpendicular to the second side board 32 and the bottom board 1. The connecting board 34 does not connect the bottom board 1. A gap (not shown) is defined between each connecting board 34 and the bottom board 1.

Each supporting board 6 includes a first abutting member 62 and a second abutting member 64. The first abutting member 62 is foldably connected to an edge of the first side board 2 apart from the bottom board 1. The second abutting member 64 extends from the free end of the first member 62. A folding line 60 is formed at the junction of the first abutting member 62 and the first side board 2. A folding line 66 is formed at the junction of the first and second abutting members 62, 64. The height of the first abutting member 62 is substantially equal to that of the first side board 2. The first abutting member 62 is foldable along the folding line 60 to abut against the inner side of the corresponding connecting board 34. The width of the second abutting member 64 is substantially equal to that of the bottom board 1. The second abutting member 64 is foldable along the folding line 66 to abut against the inner side of the bottom board 1. The supporting board 6 is slightly interferentially engaged with the bottom board 1 thereby assembling the supporting board on the bottom board 1. The supporting board 6 may be further interferentially engaged with the inner side of the second side board 32 thereby further fixing the supporting board 6. The assembling of the supporting board 6 enables the two first side boards 2, two second side boards 32 and the bottom board 1 to cooperatively form a rectangular box with an opened end.

The cover 4 is foldably connected to one of the first side boards 2. A folding line 40 is formed at the junction of the first side board 2 and the cover 4. The cover 4 is foldable along the folding line 40 to cover the opened end of the rectangular box.

The fastening board 5 is foldably connected to an edge of the cover 4 corresponding to the other first side board 2. A folding line 50 is formed at the junction of the fastening board 5 and the cover 4. The fastening board 5 is foldable along the folding line 50 to abut against the first side board 2. A pair of magnets are respectively disposed at the fastening board 5 and the first side board 2 thereby fastening the fastening board 5 to the first side board 2 for fixing the cover 4.

Referring to Fig. 1, during transportation of the foldable box, the fordable box is folded into a flat board thereby reducing the occupied space, increasing transportation efficiency and preventing the box from crushing and staving.

Referring to Figs. 2-4, in assembly, the two U-shaped members 3 is bent upwardly to enable the second side board 32 to be perpendicular to the bottom board 1. The four connecting boards 34 are bent inwardly to enable the connecting boards 34 to be perpendicular to the second side boards 32 and the bottom board 1. The first side boards 2 are bent upwardly to enable the first side boards 2 to abut against the connecting boards 34. The first abutting members 62 is bent downwardly to enable the first abutting member 62 to abut against the inner side of the connecting boards 34. The second abutting members 64 are bent outwardly to enable the second abutting member 64 to abut against the inner side of the bottom board 1. The connecting boards are fixedly connected to the first side boards through the interferential engagement between the first abutting members 62 and the second side boards and between the second abutting members 64 and the bottom board thereby forming a rectangular box. Therefore, in use of the foldable box of the present invention, it does not require to paste through gluewater or adhesive glue, thereby simplifying the assembling process, facilitating for environment protection and facilitating to use repeatedly.

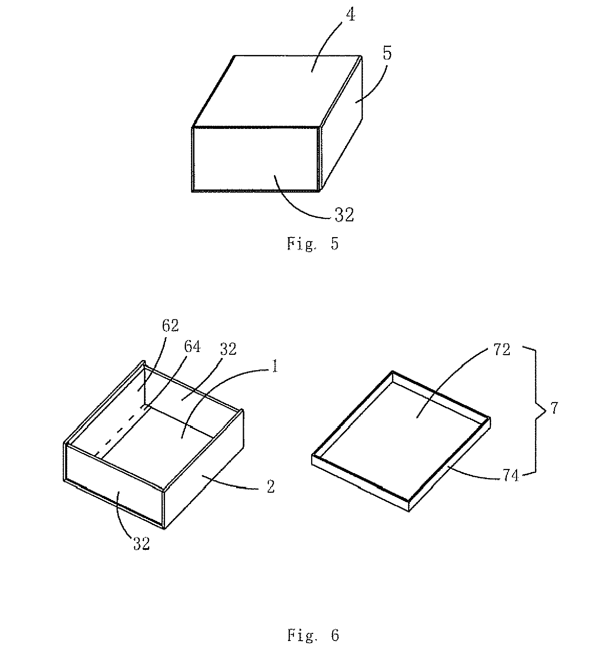

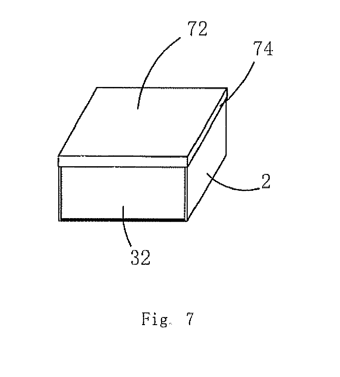

Referring to Figs. 6-7, a foldable box in accordance with a second embodiment of the present invention includes a bottom board 1, two first side boards 2 connecting one pair of opposing side edges of the bottom board 1, two U-shaped members connecting the other pair of opposing side edges of the bottom board 1, a cover 7 and two supporting boards 6 connecting the first side boards 2. As mentioned above, the bottom board 1, the two first side boards 2, the two U-shaped members 3 and the supporting member 6 cooperatively form a rectangular box with an opened end. The cover 7 includes a body 72 corresponding to the bottom board 1 and an engaging wall 74 extending downwardly from the periphery of the body 72. The cover 7 directly covers the opened end of the rectangular box.

As described above, the foldable box of the present invention is foldable to be in a shape of flat board during storage and transportation for saving the occupied space thereof thereby facilitating to reduce cost of storage and transportation. Furthermore, it does not require to paste through gluewater or adhesive glue thereby facilitating to use and use repeatedly.

While the preferred embodiment of the invention has been set forth for the purpose of disclosure, modifications of the disclosed embodiment of the invention as well as other embodiments thereof may occur to those skilled in the art. Accordingly, the appended claims are intended to cover all embodiments which do not depart from the spirit and scope of the invention.

## Claims

1. A foldable box comprising:
a bottom board;
two first side boards connecting one pair of opposing side edges of the bottom board;
two U-shaped members connecting the other pair of opposing side edges of the bottom board; and
two supporting boards respectively connecting the first side boards, the bottom board, the two first side boards, the two U-shaped members and the two supporting boards cooperatively forming a rectangular box with an opened end.

2. The foldable box of claim 1, further comprising a cover extending from one of the first side board and a fastening board extending from the free end of the cover.

3. The foldable box of claim 1 or 2, further comprising a cover which directly covers the opened end of the rectangular box.

4. The foldable box of any one of claims 1 to 3, wherein the bottom board is rectangular, the first side boards are perpendicularly connected to the pair of opposing side edges of the bottom board, and a first folding line is formed at the junction of each first side board and the bottom board.

5. The foldable box of any one of claims 1 to 4, wherein each U-shaped member includes a second side board connecting the bottom board and two connecting boards connecting opposing side edges of the second side board, the second side boards are perpendicularly connected to the other pair of opposing side edges of the bottom board, and a second folding line is formed at the junction of each side board and the bottom board.

6. The foldable box of claim 5, wherein the width of the second side board is substantially equal to the length of the side edge of bottom board, the height of the second side board is substantially equal to that of the first side board, and a third folding line is formed at the junction of the connecting board and the second side board.

7. The foldable box of any one of claims 1 to 6, wherein each supporting board includes a first abutting member and a second abutting member, the first abutting member is foldably connected to an edge of the first side board apart from the bottom board, and the second abutting member extends from the free end of the first member.

8. The foldable box of claim 7, wherein a fourth folding line is formed at the junction of the first abutting member and the first side board, a fifth folding line is formed at the junction of the first and second abutting members, the height of the first abutting member is substantially equal to that of the first side board, the first abutting member is foldable along the fourth folding line to abut against the inner side of the corresponding connecting board, the width of the second abutting member is substantially equal to that of the bottom board, the second abutting member is foldable along the fifth folding line to abut against the inner side of the bottom board, and the supporting board is slightly interferentially engaged with the bottom board thereby assembling the supporting board on the bottom board.

9. The foldable box of claim 8, wherein the supporting board is interferentially engaged with the inner side of the second side board.

10. The foldable box of claim 2 or any one of the preceding claims as far as depending on claim 2, wherein the cover is foldably connected to one of the first side boards, a sixth folding line is formed at the junction of the first side board and the cover, the cover is foldable along the sixth folding line to cover the opened end of the rectangular box, the fastening board is foldably connected to an edge of the cover corresponding to the other first side board, a seventh folding line is formed at the junction of the fastening board and the cover, the fastening board is foldable along the seventh folding line to abut against the first side board, a pair of magnets are respectively disposed at the fastening board and the first side board thereby fastening the fastening board to the first side board.
